# EUROPEAN PATENT APPLICATION

(11) **EP 2 833 265 A1**
(43) Date of publication of application: **04.02.2015**
(21) Application number: 13306091.3
(22) Date of filing: 29.07.2013
(51) Int. Cl.: G06F 9/50, H04L 12/24, G06F 15/177, H04L 29/08

(54) **Data processing**

(71) Applicant: ALCATEL LUCENT, 92100 Boulogne-Billancourt (FR)
(72) Inventor: Franck, Franck, 15 Dublin (IE); Bedini, Ivan, 15 Dublin (IE)
(74) Representative: Leppard, Andrew John

(57) **Abstract**

A data processing network, a cluster controller, a data processing node, methods and computer program products are disclosed. The data processing network comprises: a cluster controller operable to store a plurality of configurations; and a cluster of data processing nodes, said cluster controller and said cluster of data processing nodes being operable to co-operate to make one of said plurality of configurations available as an allocated read-only configuration to each data processing node in said cluster, each data processing node being operable to boot-up using said configuration, said cluster controller and cluster of data processing nodes being further operable to co-operate to allocate a read/ write storage area for each data processing node in said cluster for accessing data to be utilised during operation of that data processing node following boot-up. This approach provides for the flexible set-up of a cluster that can dynamically load a specific configuration and automatically be operative on an undetermined number of active nodes. At the same time this approach allows a separation of the available machines so to be able to concurrently run different HPC services.

## Description

### FIELD OF THE INVENTION

The present invention relates to a data processing network, a cluster controller, a data processing node, methods and computer program products.

### BACKGROUND

High-Performance-Computing (HPC) is a specialized field within cluster computing where the infrastructure of the cluster of data processing nodes can have a high impact on the performance of the software it runs. This means that HPC applications are often very specialized in their configuration to make the most of the underlying computing hardware. The set-up of a HPC cluster generally consists of three overall installation phases: the operating system installation, which is usually common to all nodes in the cluster; the software application layer, which is specific to the application domain (e.g. Hadoop, Real-time streaming framework, Matlab, scientific special-purpose code); and the specific configuration and set of data a node must compute.

Although providing a HPC cluster can provide significant performance data processing advantages when properly configured, unexpected consequences can also occur. Accordingly, it is desired to provide an improved arrangement.

### SUMMARY

According to a first aspect, there is provided a data processing network, comprising: a cluster controller operable to store a plurality of configurations; and a cluster of data processing nodes, the cluster controller and the cluster of data processing nodes being operable to co-operate to make one of the plurality of configurations available as an allocated read-only configuration to each data processing node in the cluster, each data processing node being operable to boot-up using the configuration, the cluster controller and cluster of data processing nodes being further operable to co-operate to allocate a read/ write storage area for each data processing node in the cluster for accessing data to be utilised during operation of that data processing node following boot-up.

The first aspect recognises that applications such as, for example, HPC applications are often very specialized in their configuration to make the most of the underlying computing hardware, and this is turn, makes them ill-suited for deployment in reconfigurable cloud-like environments. This drives down cost-effectiveness and implementation ease of traditional HPC deployments. In particular, the separation between the operating system, the application software, and the specific configuration and dataset makes the realization of a dynamically reconfigurable HPC system, i.e. on demand HPC-as-a-Service HPCaaS, a hard and challenging technical task. Indeed having many different purposes means that a cluster should have the ability to run many different kinds of software, and scientific/ grid-computing software usually requires a very specific setup unique to the software in question to run at top performance. To facilitate this flexibility in configuration, keep maintenance on the cluster to a minimum, and provide an easy way to switch from one configuration to another as a multi-mode cluster in a one-step operation requires a series of technical inconveniences that should be resolved to keep the system consistent and operable. Furthermore, there is currently no effective way to provide dedicated machines without either virtualization or dedicated software installations. However, the first aspect also recognises that virtualization introduces a redirection layer between the hardware and the software presenting an undesirable and unpredictable effect on the performance. The alternative to this approach is a non-virtualized dedicated software installation, which avoids these pitfalls. However, that approach introduces a much more static configuration of the cluster, where the software must be installed on each single machine with a multi-boot solution, which either consumes disk resources or does not allow a specific configuration. In other words, there are currently two main ways to go about deployment of a HPC platform, the first is to deploy a platform dedicated to one HPC task (e.g. Hadoop, Storm, etc.). This has the advantage that one can make full use of the (often very expensive) infrastructure that powers the platform, but it has the drawback that the hardware will sit unutilized if no jobs of that particular type are available for execution. The second is to deploy a general purpose infrastructure with a virtualization layer on top. That allows for the system to be utilized fully for any number of tasks. It also means, however, that the HPC software is running within a virtualized environment - something that this type of application typically suffers high performance penalties for. Neither of these solutions makes very much sense in a deployment scenario where the HPC tasks vary between different software systems, such as for example research environments or in the Infrastructure-as-a-Service market. Having to choose between full hardware utilization and optimal flexibility is undesirable.

Accordingly, a data processing network may be provided. The data processing network may comprise a cluster controller. The cluster controller may store more than one configuration. The data processing network may also comprise a cluster of data processing nodes. The cluster controller and the cluster may cooperate or function together in order to make one of the configurations available or accessible to each data processing node. The allocated configuration may be provided as a read-only configuration. Each data processing node may then function to boot up using that allocated configuration. The cluster controller and the cluster of data processing nodes may also function together to provide a read and/or write storage area for each data processing node. The allocated read/ write storage area maybe used to access data which is used during operation of the data processing node following boot-up. This approach provides for the flexible set-up of a cluster that can dynamically load a specific configuration and automatically be operative on an undetermined number of active nodes. At the same time this approach allows a separation of the available machines so to be able to concurrently run different HPC services. This is possible by providing a combination of features that, put in the right order and well-orchestrated, allows sharing of a same physical hard drive with the ability of providing a specific access to each node. This brings many of the benefits from reconfigurable cloud deployments frameworks into a HPC scenario without compromising on performance or configurability.

In one embodiment, the cluster controller and the cluster of data processing nodes are operable to co-operate to make a same one of the plurality of configurations available as the allocated read-only configuration to each data processing node in the cluster. Accordingly, the cluster controller may provide the same configuration to every data processing node in the cluster. This ensures that each node within the cluster boots up with the same configuration.

In one embodiment, the cluster controller and the cluster of data processing nodes are operable to co-operate to make the allocated read-only configuration available by transferring at least part of the configuration from the cluster controller to each data processing node in the cluster. Accordingly, at least some of the configuration may be transferred from the cluster controller to each data processing node in the cluster. This enables a single cluster controller to configure many data processing nodes.

In one embodiment, each configuration comprises a disk image. Providing a disk image is a convenient way to ensure that each data processing node is configured in the same way.

In one embodiment, each configuration comprises a disk image of a combined operating system and at least one application. Accordingly, both an operating system and an application may be provided by the disk image. This enables each data processing node to be easily reconfigured with different operating systems and applications, as required.

In one embodiment, each data processing node in the cluster is operable to mount the disk image on the cluster controller as a local disk. Hence, the disk image provided by the cluster controller may be mounted on each data processing node as a local disk.

In one embodiment, each data processing node in the cluster is operable to mount the disk image on the cluster controller as a boot disk. Again, this is particularly convenient since the data processing nodes may be configured to boot using that disk.

In one embodiment, the read/write storage area is located at at least one of the cluster controller, the data processing node and centralised storage. Accordingly, the read/ write storage area maybe located at an accessible location within the network.

In one embodiment, the read/ write storage area is mounted as at least one of a file system overlay and a union mount.

In one embodiment, the read/write storage area is mounted as the file system overlay on a root directory of the disk image. Accordingly, the read/ write storage area may be combined with the disk image. This enables the contents of the disk image to effectively be modified (without the disk image itself actually being modified - only the overlay is) in a controlled way for each data processing node to suit the particular needs of that data processing node.

In one embodiment, the file system overlay is allocated a higher priority than the disk image to enable file system overlay-modified files to be accessed in preference to corresponding disk image files. Accordingly, the overlay may be configured to have greater priority than the image in order that the files within the overlay are presented in preference to those within the disk image.

In one embodiment, the read/ write storage area is located at each data processing node and each data processing node is operable to transfer contents of the read/ write storage area to centralised storage when instructed to perform one of a deactivation and reconfiguration. Accordingly, the storage area may be provided by each data processing node. Each data processing node may transfer the contents of that storage area to a centralised storage in order to preserve the content of the overlay when the data processing node is deactivated or reconfigured.

In one embodiment, the cluster controller is operable to instruct the cluster of data processing nodes to reboot with the configuration.

In one embodiment, the cluster controller is operable to instruct different groups of the cluster of data processing nodes to reboot with a different configuration. Accordingly, the complete cluster may be split into different groups or sub-groups and each of these may be instructed by the cluster controller to boot with a different configuration. This enables the data processing network to be configured as more than one HPC arrangement in order to suit the needs of different users. It will be appreciated that each of the features mentioned above and below may be used by such groups.

In one embodiment, the cluster controller is operable to change a number of data processing nodes in the cluster in response to a request for such a change. Accordingly, when more or fewer resources are required then the cluster controller may request a change in the number of data processing nodes within the cluster.

In one embodiment, the cluster controller is operable to instruct the cluster of data processing nodes to perform one of a power-up and a shut-down.

In one embodiment, each data processing node is operable to be allocated a unique identifier.

In one embodiment, the unique identifier is determined based on a Media Access Control address associated each data processing node.

According to a second aspect, there is provided a data processing network method, comprising: storing a plurality of configurations at a cluster controller; and providing a cluster of data processing nodes; making one of the plurality of configurations available as an allocated read-only configuration to each data processing node in the cluster and booting-up using the configuration; and allocating a read/ write storage area for each data processing node in the cluster for accessing data to be utilised during operation of that data processing node following boot-up.

In one embodiment, the step of making comprises making a same one of the plurality of configurations available as the allocated read-only configuration to each data processing node in the cluster.

In one embodiment, the step of making comprises making the allocated read-only configuration available by transferring at least part of the configuration from the cluster controller to each data processing node in the cluster.

In one embodiment, each configuration comprises a disk image.

In one embodiment, each configuration comprises a disk image of a combined operating system and at least one application.

In one embodiment, the method comprises mounting the disk image on the cluster controller as a local disk of each data processing node in the cluster.

In one embodiment, the method comprises mounting the disk image on the cluster controller as a boot disk of each data processing node in the cluster.

In one embodiment, the step of allocating comprises locating the read/ write storage area at at least one of the cluster controller, the data processing node and centralised storage.

In one embodiment, the step of allocating comprises mounting the read/ write storage area as at least one of a file system overlay and a union mount.

In one embodiment, the step of allocating comprises mounting the read/ write storage area as the file system overlay on a root directory of the disk image.

In one embodiment, the step of allocating comprises allocating the file system overlay a higher priority than the disk image to enable file system overlay-modified files to be accessed in preference to corresponding disk image files.

In one embodiment, the step of allocating comprises locating the read/ write storage area at each data processing node, the method comprising the step of transferring contents of the read/write storage area to centralised storage when instructed to perform one of a deactivation and reconfiguration.

In one embodiment, the method comprises instructing the cluster of data processing nodes to reboot with the configuration.

In one embodiment, the method comprises instructing different groups of the cluster of data processing nodes to reboot with a different configuration. It will be appreciated that each of the features mentioned above and below may be used by such groups.

In one embodiment, the method comprises changing a number of data processing nodes in the cluster in response to a request for such a change.

In one embodiment, the method comprises instructing the cluster of data processing nodes to perform one of a power-up and a shut-down.

In one embodiment, the method comprises allocating each data processing node a unique identifier.

In one embodiment, the method comprises determining the unique identifier based on a Media Access Control address associated each data processing node.

According to a third aspect, there is provided a cluster controller for a data processing network, comprising: storage operable store a plurality of configurations; and co-operation logic operable to co-operate with a cluster of data processing nodes to make one of the plurality of configurations available as an allocated read-only configuration to each data processing node in the cluster and to allocate a read/ write storage area for each data processing node in the cluster for accessing data to be utilised during operation of that data processing node following boot-up.

In one embodiment, the co-operation logic is operable to co-operate to make a same one of the plurality of configurations available as the allocated read-only configuration to each data processing node in the cluster.

In one embodiment, the co-operation logic is operable to co-operate to make the allocated read-only configuration available by transferring at least part of the configuration from the cluster controller to each data processing node in the cluster.

In one embodiment, each configuration comprises a disk image.

In one embodiment, each configuration comprises a disk image of a combined operating system and at least one application.

In one embodiment, the read/write storage area is located at at least one of the cluster controller, the data processing node and centralised storage.

In one embodiment, the cluster controller comprises instruction logic operable to instruct the cluster of data processing nodes to reboot with the configuration.

In one embodiment, the cluster controller comprises instruction logic operable to instruct different groups of the cluster of data processing nodes to reboot with a different configuration. It will be appreciated that each of the features mentioned above and below may be used by such groups.

In one embodiment, the cluster controller comprises instruction logic operable to change a number of data processing nodes in the cluster in response to a request for such a change.

In one embodiment, the cluster controller comprises instruction logic operable to instruct the cluster of data processing nodes to perform one of a power-up and a shut-down.

In one embodiment, the cluster controller comprises instruction logic operable to allocate each data processing node a unique identifier.

In one embodiment, the unique identifier is determined based on a Media Access Control address associated each data processing node.

According to a fourth aspect, there is provided a cluster controller method, comprising: storing a plurality of configurations; co-operating with a cluster of data processing nodes to make one of the plurality of configurations available as an allocated read-only configuration to each data processing node in the cluster; and allocating a read/write storage area for each data processing node in the cluster for accessing data to be utilised during operation of that data processing node following boot-up.

In one embodiment, the step of co-operating comprises making a same one of the plurality of configurations available as the allocated read-only configuration to each data processing node in the cluster.

In one embodiment, the step of co-operating comprises making the allocated read-only configuration available by transferring at least part of the configuration from the cluster controller to each data processing node in the cluster.

In one embodiment, each configuration comprises a disk image.

In one embodiment, each configuration comprises a disk image of a combined operating system and at least one application.

In one embodiment, the method comprises locating the read/ write storage area at at least one of the cluster controller, the data processing node and centralised storage.

In one embodiment, the method comprises instructing the cluster of data processing nodes to reboot with the configuration.

In one embodiment, the method comprises instructing different groups of the cluster of data processing nodes to reboot with a different configuration. It will be appreciated that each of the features mentioned above and below may be used by such groups.

In one embodiment, the method comprises changing a number of data processing nodes in the cluster in response to a request for such a change.

In one embodiment, the method comprises instructing the cluster of data processing nodes to perform one of a power-up and a shut-down.

In one embodiment, the method comprises allocating each data processing node a unique identifier.

In one embodiment, the unique identifier is determined based on a Media Access Control address associated each data processing node.

According to a fifth aspect, there is provided a data processing node for a data processing network, comprising: co-operation logic operable to co-operate with a cluster controller to make one of a plurality of configurations stored by the cluster controller available as an allocated read-only configuration; boot-up logic operable to boot-up using the configuration, the co-operation logic being further operable to co-operate to allocate a read/ write storage area for accessing data to be utilised during operation following boot-up.

In one embodiment, the co-operation logic is operable to co-operate to make a same one of the plurality of configurations available as the allocated read-only configuration.

In one embodiment, the co-operation logic is operable to co-operate to make the allocated read-only configuration available by receiving at least part of the configuration from the cluster controller.

In one embodiment, each configuration comprises a disk image.

In one embodiment, each configuration comprises a disk image of a combined operating system and at least one application.

In one embodiment, the co-operation logic is operable to mount the disk image as a local disk.

In one embodiment, the co-operation logic is operable to co-operate mount the disk image as a boot disk.

In one embodiment, the read/ write storage area is located at at least one of the cluster controller, the data processing node and centralised storage.

In one embodiment, the co-operation logic is operable to mount the read/ write storage area as at least one of a file system overlay and a union mount.

In one embodiment, the co-operation logic is operable to mount the read/ write storage area as the file system overlay on a root directory of the disk image.

In one embodiment, the co-operation logic is operable to allocate the file system overlay a higher priority than the disk image to enable file system overlay-modified files to be accessed in preference to corresponding disk image files.

In one embodiment, the read/ write storage area is located at the data processing node and the co-operation logic is operable to transfer contents of the read/write storage area to centralised storage when instructed to perform one of a deactivation and reconfiguration.

In one embodiment, the boot-up logic is operable to reboot with the configuration in response to an instruction from the cluster controller.

In one embodiment, the boot-up logic is operable to perform one of a power-up and a shut-down in response to an instruction from the cluster controller.

In one embodiment, the co-operation logic is operable to allocate a unique identifier.

In one embodiment, the unique identifier is determined based on a Media Access Control address associated the data processing node.

According to a sixth aspect, there is provided a data processing node method, comprising: co-operating with a cluster controller to make one of a plurality of configurations stored by the cluster controller available as an allocated read-only configuration; booting-up using the configuration; and allocating a read/ write storage area for accessing data to be utilised during operation following boot-up.

In one embodiment, the step of co-operating comprises making a same one of the plurality of configurations available as the allocated read-only configuration.

In one embodiment, the step of co-operating comprises making the allocated read-only configuration available by receiving at least part of the configuration from the cluster controller.

In one embodiment, each configuration comprises a disk image.

In one embodiment, each configuration comprises a disk image of a combined operating system and at least one application.

In one embodiment, the step of co-operating comprises mounting the disk image as a local disk.

In one embodiment, the step of co-operating comprises mounting the disk image as a boot disk.

In one embodiment, the read/write storage area is located at at least one of the cluster controller, the data processing node and centralised storage.

In one embodiment, the step of co-operating comprises mounting the read/ write storage area as at least one of a file system overlay and a union mount.

In one embodiment, the step of co-operating comprises mounting the read/ write storage area as the file system overlay on a root directory of the disk image.

In one embodiment, the step of co-operating comprises allocating the file system overlay a higher priority than the disk image to enable file system overlay-modified files to be accessed in preference to corresponding disk image files.

In one embodiment, the read/ write storage area is located at the data processing node and wherein the step of co-operating comprises transferring contents of the read/write storage area to centralised storage when instructed to perform one of a deactivation and reconfiguration.

In one embodiment, the step of booting-up comprising rebooting with the configuration in response to an instruction from the cluster controller.

In one embodiment, the method comprises performing one of a power-up and a shut-down in response to an instruction from the cluster controller.

In one embodiment, the method comprises allocating a unique identifier.

In one embodiment, the unique identifier is determined based on a Media Access Control address associated the data processing node.

According to a seventh aspect there is provided a computer program product operable, when executed on a computer, to perform the method steps of the second, fourth or sixth aspects.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:

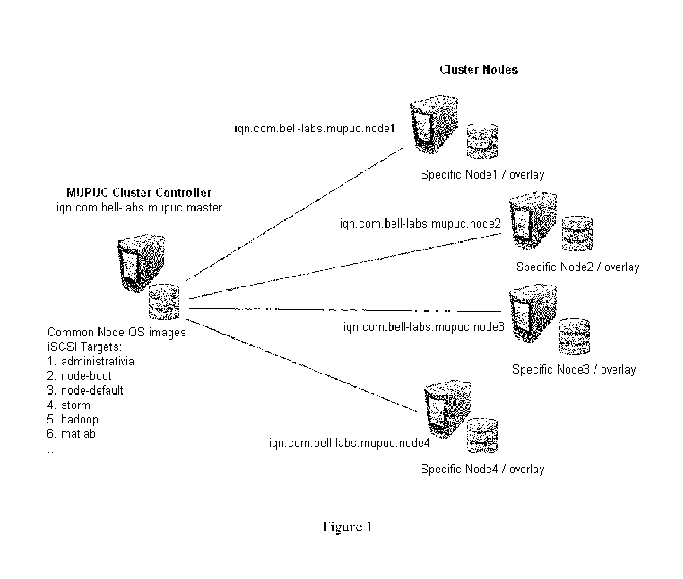

Figure 1 illustrates a MUPUC (MUlti-PUrpose Cluster) HPC cluster according to one embodiment.

### DESCRIPTION OF THE EMBODIMENTS

### Overview

Before discussing the embodiments in any more detail, first an overview will be provided. Embodiments provide an arrangement where a centralised cluster controller is provided which is able to allocate, de-allocate and/or reconfigure data processing nodes within a cluster. In particular, the cluster controller stores a number of different configurations, any of which may be provided to every data processing node within a cluster or group within the cluster. Each of these configurations may comprise, for example, a particular operating system and/or one or more applications. One of those configurations is allocated to every data processing node within the cluster or group in response to a request from a user to provide a number of data processing nodes, each of which has that configuration. Once the data processing nodes have been allocated to the cluster and the cluster controller has configured each data processing node, the data processing nodes may then boot up using that configuration. This enables a number of data processing nodes to each be booted up in the same configuration, as requested by the user. By making the configurations read-only, any changes made by the data processing nodes do not affect the configurations provided by the cluster controller. To enable data to be created and stored during the operation of the data processing nodes, a read/ write storage area is provided into which that data may be read and/or written. This provides for a flexible arrangement.

### Network Overview

Embodiments provide an arrangement which seek to make it possible to reap the benefits of having a fully-reconfigurable High-Performance-Computing (HPC) solution, but without imposing the restrictions dictated by a virtualized environment. In particular, embodiments provide a HaaS (HPC-as-a-Service) which introduces a cluster controller into the setup of a cluster system. To draw a parallel to cloud-based arrangements, the cluster controller is a special node that acts as a sort of hypervisor for the remaining nodes in the cluster. There is, however, no layer of virtualization introduced, as the HPC software runs directly on the hardware of the cluster nodes ("cluster nodes" are the nodes in the cluster that do not operate as the cluster controller), with all the benefits that brings in terms of performance. The cluster controller acts solely as an orchestrator, and does not necessarily participate in the computations done by the cluster nodes.

### Cluster Controller

The cluster controller uses an interface (for example an Intelligent Platform Management Interface (IPMI) or some custom software) to the cluster nodes that allows it to administrate their low-level functionality, such as whether they must switch on or off, or reboot, etc. Furthermore, the cluster controller keeps a repository of system images that each hold one of the configurations is it possible for the cluster user to request. Each system image can be thought of as the HaaS parallel to a virtual machine image - with the important distinction, however, that only one image can be active on a node at a time. When a user requests a certain configuration, the cluster controller uses its management tool to instruct any number of nodes in the cluster to power up in that configuration.

Having system images reside on the cluster controller provides the install-once-deploy-many functionality known from cloud-based systems. However, by itself this arrangement has significant drawbacks: First, as the images reside on the cluster controller, the nodes must access them by a network-mounted file system. The performance of such file systems is usually much below that of local disk file systems. Secondly, having multiple nodes share a single image will cause problems when the nodes need to write data to the file systems. The desirable separation qualities to be had from cloud systems are thus lost.

Therefore, embodiments combine a network-boot procedure of the image repository with a custom partitioning scheme that allows users to transparently store, modify, and delete data locally on each node.

Accordingly, embodiments provide: a unique sharable system image installation point; a clear separation of the system image from persistent data; automatic identification of the specific booting node; a parameterized boot loader capable of reading and reconfiguring specifically each node dynamically at run-time; and an easy configuration switcher.

### System Images

The function of the unique system image is to allow the creation of a shared Operating System image among all the nodes in the cluster. This feature has many advantages. For example, this enables the possibility of switching on the number of nodes necessary without having to install the system on each node. Even in a large cluster with hundreds of nodes, or when a new machine is added to the cluster, the only necessary operation is to configure the machine to access the system images stored on the cluster controller, and the system will be able to boot into a functional environment. The technical difficulty here is how to maintain the system in a consistent state. In particular, if many nodes use the same shared system partition, then the file system would become inconsistent due to the numerous run-time write accesses by different clients. To avoid such a problem the disk partition containing and sharing the system installation is presented as a read-only disk that keeps an immutable state throughout execution.

### Writeable Storage

Embodiments therefore also provide each node with writable storage that, without any modification to the operating system software, the cluster can run consistently. The writable part of the disk is mounted in a way that it provides at the same time direct access to the readable partition without any modification to the classical file system paths.

In embodiments, data on the HaaS system adheres to a strict division into two categories: Application Images and Dataset-Configuration Overlays (or, overlays for short). Overlays are mutable sandboxes that users are given to store their datasets, additional programs, or whatever else they need to run their applications. Each overlay is completely independent from other overlays, and from any application image. Thus, any overlay can be used with any of the application images on the system, and it is up to the owner of the overlay to keep it in a useful or sane state.

In fact, a moniker overlay is chosen deliberately, because the HaaS overlays are exactly that: a file system layered transparently on top of the application image a node has booted. Thus, overlays are not to be confused with actual datasets in a database world, nor with operating system snapshots as known from, for example, virtual machines. When an overlay has been created and activated (when the Nodes have been booted with overlay), everything a HaaS user does is stored directly onto disk in that particular overlay. Thus, there's no need to request a "snapshot" of the system in order to save work, it happens automatically and anything saved will be available the next time the overlay is activated.

Since the overlay is layered on top of the entire file system, a user can even update applications, install new applications, or delete data from application images without actually affecting the application image itself. In this sense, thinking of an overlay as a personal sandbox is an accurate analogy.

As the overlays represent data on the nodes' disks layered on top of an application image that is served by the cluster controller, an overlay will contain different data on each node. This way an overlay may be created where Node 1 is configured to act as master node for a distributed computing system, and Node 4 is a fall-back for Node 1. This configuration will then persist when next the overlay is activated, and each of the nodes will be in the same state it was in when the configuration was done.

### Unique Identifiers

Embodiments provide a recognizable unique identification at boot time for each cluster node. It will be appreciated that it is important to clearly distinguish each single machine at boot time, otherwise the result of sharing the same physical disk containing the system image would result in an unusable cluster, with all or some nodes having the same internet protocol (IP) address and name. Thus, in order to make the system utilizable, a unique identifier is obtained automatically for each node so that it is available at boot time directly. In one embodiment (described below) a specific script obtains the MAC address of the booting machine and, reading from a specific prefilled file, modifies on-the-fly the standard boot loader configuration files before they are read by the system set-up.

The cluster controller, through a custom tool that allows setting the desired values by changing a node's boot configuration with the right command parameters dynamically at run-time, sets the desired system image and dataset overlay to be loaded at boot time.

Embodiments provide a multipurpose cluster which provides the capacity to a user of switching from a configuration to another in an easy one-step action which provides a system which is easily reconfigurable. Also, nodes in the cluster may be split into different groups and each group may be configured separately, thereby providing in effect multiple different clusters simultaneously.

### Example Implementation

Figure 1 illustrates a MUPUC (MUlti-PUrpose Cluster) HPC cluster according to one embodiment. The use of an Internet Small Computer System Interface iSCSI and an Overlay File system obtain the right level of separation between system image and application/ node configuration and data.

It will be appreciated that iSCSI is an IP-based storage networking standard for linking data storage facilities. By carrying SCSI commands over IP networks, iSCSI is used to facilitate data transfers over intranets and to manage storage even over long distances. The protocol allows clients (called initiators) to send SCSI commands (CDBs) to SCSI storage devices (targets) on remote servers. It is a storage area network (SAN) protocol, allowing organizations to consolidate storage into data centre storage arrays while providing hosts (such as database and web servers) with the illusion of locally attached disks. Unlike a traditional Fibre Channel, which requires special-purpose cabling, iSCSI can be run over long distances using existing network infrastructure.

An Overlay File system (OFS) is a file system service for Linux that implements a union mount for other file systems. It allows files and directories of separate file systems, known as branches, to be transparently overlaid, forming a single coherent file system. Contents of directories that have the same path within the merged branches will be seen together in a single merged directory, within the new, virtual file system. When mounting branches, the priority of one branch over the other is specified. So when both branches contain a file with the same name, one gets priority over the other. The different branches may be both read-only and read-write file systems, so that writes to the virtual, merged copy are directed to a specific real file system. This allows a file system to appear as writeable, but without actually allowing writes to change the file system, also known as copy-on-write. This feature is highly used in MUPUC to physically separate the system image, managed by the iSCSI functionality shown above, from a persistent data storage in one hand and on the other hand to allow a finer granular configuration for each node, where required.

### System Setup

The MUPUC currently consists of one cluster controller node and four worker nodes, although it will be appreciated that any number of worker nodes may be provided. The cluster controller maintains its collection of system images as iSCSI targets, and the worker nodes are able to perform network boot from these targets. All the iSCSI targets on the cluster controller are presented as read-only disks, which makes each of them an immutable container for one system image. As the worker nodes bring the systems online, however, they require some read-write storage (for log files, application data, system files, etc.). This is accomplished by using the Overlay File system where the local disk storage is mounted transparently on top of the read-only network file systems on the worker nodes.

The file system as seen by a worker node user is thus a combination of the read-only iSCSI disk image served from the cluster controller and a persistent overlay that holds all the modifications the user has made to the image. The overlay is served typically from the locally attached disks, and is thus local to the node the modifications were made on.

A Boot Target Manager is a special MUPUC tool of the cluster controller that enables easy reconfiguration of the MUPUC system. By manipulating the boot parameters of the worker nodes, it can instruct each of them to boot off a given system image and mount a given overlay on top of it.

These boot parameters are passed to the operating system kernel loaded on the worker nodes, and are detected by the worker nodes during startup. Another MUPUC tool - the Startup Manager - makes sure that these parameters are put into effect before the cluster user can reach the nodes.

An example of the kernel parameters issued in the MUPUC system:
*frfranck*@*node2:∼$ cat* / *proc*/ *cm dline*
*BOOT_IMAGE*=/*vm linuz-3.2.0-23-generic root*=/*dev*/*sdb1 ro textonly nomodeset ip*=*cluster*
*iscsi_target_name*=*iqn.2012-08.com.bell-labs.mupuc:node-default overlay*=

All this is possible due to a single configuration file, deployed with the system images, that maps the networking hardware on a node to a specific network configuration. That configuration, in turn, allows the MUPUC system to deploy the requested configuration on each node.

An example of the configuration file used on the MUPUC system: *root*@*controller:*∼/*scripts# more*/*mnt*/*administrativia*/*etc*/*mupuc*/*cluster_ethers*
*# Ethernet MAC # IP address*/ *subnet mask # Server IP # node hostname # cluster nodes 1-4*
*e4:1f-13:80:c4:f9 172.16.200.101*/*255.255.255.0 172.16.200.1 node1*
*e4:1f-13:80:c9:c7 172.16.200.102*/*255.255.255.0 172.16.200.1 node2*
*e4:1f-13:80:cb:95 172.16.200.103*/*255.255.255.0 172.16.200.1 node3*
*e4:1f-13:80:cb:dd 172.16.200.104*/*255.255.255.0 172.16.200.1 node4*

Filling this file with the data corresponding to a node to be added to the cluster represents the one-step-only action that must be done manually, all the rest is handled dynamically and automatically.

Embodiments enable true High-Performance Computing to be deployed in an IaaS scenario which provides a combination of minimum administrative overhead and maximum flexibility for users looking to deploy HPC systems.

In addition, the dynamic, reconfigurable nature of the system allows for nodes to be powered-off entirely when they aren't in use, and automatically powered-up on-demand, providing power saving benefits to IaaS operators.

This approach has numerous advantages, including:
- **Reconfigurability** - The MUPUC cluster can be used for all manner of experiments, and can very easily be switched from one configuration to another. This means that the cluster hardware is utilized far better than it would have been with only a software system installed on it.
- **Performance** - Since the MUPUC nodes are not running a virtualization layer, there is no indirection between the software running on the cluster and the hardware. This provides significant performance benefits over virtualized solutions. The exact advantage enjoyed depends on the application running on the cluster, but being able to optimize HPC software to the underlying hardware can easily provide an order of magnitude performance improvement vs. a non-optimized version.

- **Separability -** Software installed in one system image cannot interfere with that of another image. This gives MUPUC users the freedom to experiment with the system in any way they like without having to worry about affecting other users' applications. This is desirable from a maintenance standpoint, as it keeps the administrative overhead of running the MUPUC low without sacrificing flexibility. It is also essential for an IaaS provider, as it keeps different customers' data separated.

Embodiments provide a cost-effective and easy solution bringing many advantages. In the era of big data solutions and cloud computing embodiments can be adopted by many companies, production environment, research laboratories, and generally in any environment that requires ad-hoc access to HPC platform.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A data processing network, comprising:
a cluster controller operable to store a plurality of configurations; and
a cluster of data processing nodes, said cluster controller and said cluster of data processing nodes being operable to co-operate to make one of said plurality of configurations available as an allocated read-only configuration to each data processing node in said cluster, each data processing node being operable to boot-up using said configuration, said cluster controller and cluster of data processing nodes being further operable to co-operate to allocate a read/ write storage area for each data processing node in said cluster for accessing data to be utilised during operation of that data processing node following boot-up.

2. The data processing network of claim 1, wherein said cluster controller and said cluster of data processing nodes are operable to co-operate to make said allocated read-only configuration available by transferring at least part of said configuration from said cluster controller to each data processing node in said cluster.

3. The data processing network of claim 1 or 2, wherein each configuration comprises a disk image.

4. The data processing network of any preceding claim, wherein each configuration comprises a disk image of a combined operating system and at least one application.

5. The data processing network of claims 2 or 3, wherein each data processing node in said cluster is operable to mount said disk image on said cluster controller as at least one of a local disk and a boot disk.

6. The data processing network of any preceding claim, wherein said read/ write storage area is mounted as said file system overlay on a root directory of said disk image.

7. The data processing network of claim 6, wherein said file system overlay is allocated a higher priority than said disk image to enable file system overlay-modified files to be accessed in preference to corresponding disk image files.

8. The data processing network of any preceding claim, wherein said read/ write storage area is located at each data processing node and each data processing node is operable to transfer contents of said read/write storage area to centralised storage when instructed to perform one of a deactivation and reconfiguration.

9. The data processing network of any preceding claim, wherein said cluster controller is operable to instruct said cluster of data processing nodes to reboot with said configuration.

10. A data processing network method, comprising:
storing a plurality of configurations at a cluster controller; and
providing a cluster of data processing nodes;
making one of said plurality of configurations available as an allocated read-only configuration to each data processing node in said cluster and booting-up using said configuration; and
allocating a read/write storage area for each data processing node in said cluster for accessing data to be utilised during operation of that data processing node following boot-up.

11. A cluster controller for a data processing network, comprising:
storage operable store a plurality of configurations; and
co-operation logic operable to co-operate with a cluster of data processing nodes to make one of said plurality of configurations available as an allocated read-only configuration to each data processing node in said cluster and to allocate a read/ write storage area for each data processing node in said cluster for accessing data to be utilised during operation of that data processing node following boot-up.

12. A cluster controller method, comprising:
storing a plurality of configurations;
co-operating with a cluster of data processing nodes to make one of said plurality of configurations available as an allocated read-only configuration to each data processing node in said cluster; and
allocating a read/ write storage area for each data processing node in said cluster for accessing data to be utilised during operation of that data processing node following boot-up.

13. A data processing node for a data processing network, comprising:
co-operation logic operable to co-operate with a cluster controller to make one of a plurality of configurations stored by said cluster controller available as an allocated read-only configuration; and
boot-up logic operable to boot-up using said configuration, said co-operation logic being further operable to co-operate to allocate a read/ write storage area for accessing data to be utilised during operation following boot-up.

14. A data processing node method, comprising:
co-operating with a cluster controller to make one of a plurality of configurations stored by said cluster controller available as an allocated read-only configuration; and
booting-up using said configuration; and

15. A computer program product operable, when executed on a computer, to perform the method steps any one of claims 10, 12 or 14.
